# EUROPEAN PATENT APPLICATION

(11) **EP 3 660 336 A1**
(43) Date of publication of application: **03.06.2020**
(21) Application number: 18209019.1
(22) Date of filing: 28.11.2018
(51) Int. Cl.: F16B 2/10, F16L 3/10, B04B 5/00, B04B 9/12, F01M 13/04

(54) **MOUNTING BRACKET, SENSOR ASSEMBLY AND ROTOR SEPARATOR**

(71) Applicant: Alfdex AB, 261 24 Landskrona (SE)
(72) Inventor: JONSSON, Patrik, SE-141 40 Huddinge (SE); WALTER, Mikael, SE-117 60 Stockholm (SE)
(74) Representative: Alfa Laval Attorneys

(57) **Abstract**

A mounting bracket (1) is disclosed configured to mount a component (3, 4) to a rotor separator (5). The mounting bracket (1) comprises an annular body (7) with an opening (9) and a first and a second end portion (11, 12) adjacent to the opening (9) and a mounting portion (13) arranged at the first and second end portions (11, 12). The mounting bracket (1) is arranged to be positioned around a portion (15) of the rotor separator (5). The mounting portion (13) is arranged to attach the mounting bracket (1) to the portion (15) of the rotor separator (5) when the component (3, 4) is mounted to the mounting portion (13). The present disclosure further relates to a sensor assembly (40) and a rotor separator (5).

## Description

### TECHNICAL FIELD

The present disclosure relates to a mounting bracket configured to mount a component to a rotor separator. The present disclosure further relates to a sensor assembly for sensing the rotation of a rotating member of a rotor separator, wherein the sensor assembly comprises a sensor and a mounting bracket. Moreover, the present disclosure relates to a rotor separator comprising a mounting bracket.

### BACKGROUND

A mixture of fluids having different densities may be separated from one another through use of a rotor separator, such as a centrifugal separator. As used herein, a rotor separator is a device for separating two or more phases of a mixture of fluids, i.e. gases and/or liquids, where a rotor is used in the separation process. One specific use of a rotor separator is to separate a liquid phase from crankcase gases of an internal combustion engine. Crankcase gases of an internal combustion engine derive from gas leaking past piston rings from combustion chambers of the internal combustion engine to the crankcase of the engine. This continuous leaking of gas into the crankcase can lead to an undesirable increase of pressure within the crankcase and, as a consequence, to a need to vent gas from the casing. Crankcase gases typically carries a quantity of engine oil, as droplets or a fine mist, as well as other liquid hydrocarbons, soot, and other solid combustion residues. These substances may be environmentally harmful substances. Therefore, for certain types of combustion engines, legislation requires crankcase gases to be disposed of in an environmentally friendly manner.

In some internal combustion engines, the crankcase gases are led to an inlet of the combustion engine. In this way, the crank case gases will not directly be vented out to the surrounding air. However, functionality of the internal combustion engine may be adversely affected by the presence of oil in the inlet air, particularly for engines comprising turbocharging system wherein the efficiency of a compressor of the turbocharging system can be adversely affected. Therefore, it is an advantage if the crankcase gas is cleaned to remove oil carried by the gas prior to the gas being introduced into the inlet system. This cleaning process may be undertaken by a rotor separator, which is mounted on or adjacent the crankcase and which directs cleaned gas to the inlet system and directs separated oil back to the crankcase. An example of such a separator is disclosed e.g. in the document US 8,657,908.

The rotor of a rotor separator can for example be driven by a hydraulic drive arrangement or an electric drive arrangement. Some hydraulic drive arrangements utilize impact force, e.g. where a liquid jet strikes a turbine wheel to create the rotational force. However, other drive arrangements are also contemplated, in particular a reaction drive where a liquid jet is discharged from a rotor in a tangential direction, at a position offset from the rotational axis of the rotor, thereby providing the rotational force of the rotor. An example of such a drive arrangement can be found in the document US 2005/0198932 A1.

In some cases, it is desirable to mount one or more components to a rotor separator. As an example, in some cases, it is desirable to mount a sensor to a rotor separator for sensing the rotation of the rotor in order to measure the rotational speed of the rotor. An example of such measuring can be found in the document WO 2006/132577 A1. The measuring the rotational speed of the rotor may be made occasionally, for example during a development phase of a system comprising the rotor separator. In other cases, a sensor for sensing the rotation of the rotor may be mounted permanently to a rotor separator.

Rotor separators are usually arranged in limited spaces, in particular within the automotive industry, with many other components and elements arranged close to and/or around the rotor separator. Therefore, the mounting procedure of components to rotor separators can be problematic and time-consuming. In addition, in many cases, rotor separators operate in demanding environments where the rotor separator is subjected to a considerable amount of vibration. Therefore, components, such as sensors, risk falling off the rotor separator, especially during operation of the rotor separator.

Furthermore, generally, on today's consumer market, it is an advantage if products, such as rotor separator and associated components, have conditions and/or characteristics suitable for being manufactured and assembled in a cost-efficient manner.

### SUMMARY

It is an object of the present invention to overcome, or at least alleviate, at least some of the above-mentioned problems and drawbacks.

According to a first aspect of the invention, the object is achieved by a mounting bracket configured to mount a component to a rotor separator. The mounting bracket comprises an annular body with an opening and a first and a second end portion adjacent to the opening. The mounting bracket further comprises a mounting portion arranged at the first and second end portions. The mounting bracket is arranged to be positioned around a portion of the rotor separator. The mounting portion is arranged to attach the mounting bracket to the portion of the rotor separator when the component is mounted to the mounting portion.

Thereby, a mounting bracket is provided which can be used to mount components to a rotor separator in a simple and efficient manner. Moreover, a mounting bracket is provided which can be used in a simple manner also in cases where the available space is limited. This is because a user can thread the mounting bracket around a portion of the rotor separator and displace the first and second end portion to a first closed position, for example using two or more fingers of one hand. Since the mounting portion is arranged at the first and second end portions, the user can in a simple manner mount a component to the mounting portion. Upon mounting the component to the mounting portion, the mounting portion attaches the mounting bracket to the portion of the rotor separator.

Accordingly, a mounting bracket is provided which can be used to mount a component to a rotor separator in a simple, efficient, and secure manner.

Thus, a mounting bracket is provided overcoming, or at least alleviating, at least some of the above-mentioned problems and drawbacks. As a result, the above-mentioned object is achieved.

Optionally, the mounting bracket comprises a retaining mechanism configured to retain the first and second end portions in a first closed position when the first and second end portions are displaced to the first closed position. Since the mounting bracket comprises the retaining mechanism, a mounting bracket is provided further facilitating mounting of components to rotor separators. This is because in a mounting procedure of such a component, a user can position the mounting bracket around a portion of the rotor separator and displace the first and second end portion to the first closed position. As a result, due to the retaining mechanism, the mounting bracket is held around the portion of the rotor separator. Then, the user can mount the component to the mounting portion in a simple manner without having to hold or fixate the mounting bracket relative the rotor separator. As a further result, the mounting of components to rotor separators is facilitated in cases where the available space is limited. This is because a user can thread the mounting bracket around a portion of a rotor separator and displace the first and second end portion to the first closed position, for example using two or more fingers of one hand. Since the mounting portion is arranged at the first and second end portions, the user can in a simple manner mount a component to the mounting portion. Moreover, since the mounting bracket is held around the portion of the rotor separator, due to the retaining mechanism, such a mounting procedure of the component is facilitated, and can be made using one hand only.

Optionally, the retaining mechanism comprises a first protrusion and a first recess, wherein the first protrusion is arranged to protrude into the first recess when the first and second end portions are in the first closed position. Thereby, the first and second end portions are securely retained in the first closed position in a simple and efficient manner.

Optionally, the mounting bracket comprises a flange, wherein the first protrusion is arranged on the flange. Thereby, the first and second end portions can be even more securely retained in the first closed position. Furthermore, a displacement of the first and second end portions from an open position to the first closed position can be facilitated.

Optionally, the flange is arranged at the first end portion, and wherein the flange extends past the second end portion when the first and second end portions are in the first closed position. Thereby, the first and second end portions can be even more securely retained in the first closed position. Furthermore, a displacement of the first and second end portions from an open position to the first closed position can be facilitated.

Optionally, the first protrusion is arranged to protrude into the first recess in a radial direction relative the annular body when the first and second end portions are in the first closed position. Thereby, the first and second end portions are even more securely retained in the first closed position. This is because the first and second end portions are retained in tangential directions relative the annular body. As a further result thereof, the mounting of components to rotor separators is further facilitated when using the mounting bracket.

Optionally, the retaining mechanism comprises a second protrusion and a second recess, and wherein the second protrusion is arranged to protrude into the second recess in a tangential direction relative the annular body when the first and second end portions are in the first closed position. Thereby, the first and second end portions are even more securely retained in the first closed position. This is because the first and second end portions are retained in radial directions relative the annular body. As a further result thereof, the mounting of components to rotor separators is further facilitated when using the mounting bracket.

Optionally, the second protrusion and the second recess are arranged at a circumferential distance from the first protrusion and the first recess. Thereby, the first and second end portions are even more securely retained in the first closed position, and displacement of the first and second end portions between on open and closed position is facilitated.

Optionally, the mounting portion is configured to receive a fastening element. Thereby, a mounting bracket is provided further facilitating mounting of components to rotor separators, and conditions are provided for using one fastening element for mounting a component to the mounting portion as well as for attaching the mounting bracket to the portion of the rotor separator.

Optionally, the mounting portion is arranged to displace the first and second end portions from a first closed position to a second closed position when the fastening element is inserted into the mounting portion. Thereby, attachment of the mounting bracket to the portion of the rotor separator is further ensured.

Optionally, the mounting portion comprises a first hole in the first end portion and a second hole in the second end portion. Thereby, a simple and efficient mounting portion is provided, which provides conditions for using one fastening element for mounting a component to the mounting portion as well as for attaching the mounting bracket to the portion of the rotor separator.

Optionally, the first and second holes are arranged at positions causing the displacement of the first and second end portions from the first closed position to the second closed position when a fastening element is inserted into the first and second holes. Thereby, a displacement of the first and second end portions to the second closed position is obtained in a simple and efficient manner when a fastening element is inserted into the first and second holes, i.e. when a component is mounted to the mounting portion. As a result, a mounting bracket is provided further facilitating mounting of components to rotor separators.

Optionally, the circumference of the annular body is reduced upon a displacement of the first and second end portions from the first closed position to the second closed position. Thereby, a mounting bracket is provided further ensuring attachment of the mounting bracket to the portion of the rotor separator.

Optionally, each of the first and second holes comprises a centre axis substantially parallel to a centre axis of the annular body. Thereby, a mounting bracket is provided further facilitating mounting of components to rotor separators. As an example, in cases where the mounting bracket is used to mount a component to an inlet or outlet portion of the rotor separator, a fastening element can be inserted into the first and second holes in a direction parallel to a rotation axis of a rotor of the cylindrical rotor separator. Thereby, the fastening element can be inserted, such as screwed, in an insertion direction corresponding to insertion directions of other fastening elements of the rotor separator, as well as of fastening elements of other components arranged adjacent to the rotor separator.

Optionally, the annular body comprises an elastic section arranged substantially opposite to the opening. Thereby, a displacement of the first and second end portions between an open position and the first closed position is facilitated. Moreover, as is further explained herein, the elastic section may provide a spring function when the mounting bracket is mounted around a portion of a rotor separator ensuring a more constant compression force of the mounting bracket around portions of rotor separators having different sizes. Furthermore, upon the displacement of the first and second end portions from the first closed position to the second closed position, the elastic section may expand to a certain extent, which also provides conditions for mounting the mounting bracket around rotor separators having different sizes. Moreover, the elastic section reduces the impact of manufacturing tolerances of the mounting bracket, as well as reduces the impact of manufacturing tolerances of a rotor separator onto which the mounting bracket is intended to be mounted.

Optionally, the elastic section is a corrugated section of the annular body. Thereby, conditions are provided for manufacturing the elastic section, and thus also the mounting bracket, in a cost-efficient manner. Moreover, since the elastic section is a corrugated section of the annular body, the spring function of the elastic section is improved. As a result, a greater expansion of the elastic section is enabled upon displacement of the first and second end portions from the first closed position to the second closed position. Moreover, an even more constant compression force can be obtained when the mounting bracket is mounted to a portion of a rotor separator. Furthermore, the mounting bracket can be mounted to portions of rotor separators having larger differences in size. In addition, the elastic section further reduces the impact of manufacturing tolerances of the mounting bracket, as well as reduces the impact of manufacturing tolerances of a rotor separator onto which the mounting bracket is intended to be mounted.

Optionally, each of the first and second end portions comprises a protruding section protruding radially from the annular body. Thereby, a mounting procedure using the mounting bracket is further facilitated. This is because a user may displace the first and second end portions from an open position to the first closed position simply by applying a force onto the respective protruding section in a respective closing direction, for example using two or more fingers of one hand.

Optionally, the mounting bracket comprises a guiding structure arranged at the mounting portion, wherein the guiding structure is arranged to guide the component relative the mounting portion when the component is mounted to the mounting portion. Thereby, positioning and alignment of a component is facilitated upon mounting the component to the mounting portion. As a further result, a mounting bracket is provided further facilitating the procedure of mounting components to rotor separators.

Optionally, the guiding structure is cylindrical. Thereby, a simple and efficient guiding structure is provided, which also may facilitate the insertion of a fastening element into the mounting portion.

Optionally, the mounting bracket comprises a positioning structure arranged to superimpose a positioning structure of the rotor separator when the mounting bracket is positioned around the portion of the rotor separator at a predetermined angular position relative the rotor separator. Thereby, conditions are provided for mounting the mounting bracket at a predetermined angular position relative the rotor separator, simply by aligning the positioning structure of the mounting bracket and a positioning structure of the rotor separator. In this manner, components can be mounted to a rotor separator at a predetermined angular position relative the rotor separator in a simple and precise manner. Furthermore, a more secure attachment can be provided of the mounting bracket relative the rotor separator.

Optionally, the positioning structure of the mounting bracket comprises a protrusion, and wherein the positioning structure of the rotor separator comprises a plurality of circumferentially distributed recesses. Thereby, conditions are provided for mounting the mounting bracket at a predetermined angular position relative the rotor separator, simply by inserting the locking element into a recess of the rotor separator. Furthermore, a more secure attachment of the mounting bracket relative the rotor separator is provided.

Optionally, the mounting bracket is arranged to be mounted around an inlet or outlet portion of the rotor separator. Thereby, a simple and secure attachment of components to rotor separators can be provided, using the mounting bracket.

According to a second aspect of the invention, the object is achieved by a sensor assembly for sensing the rotation of a rotating member of a rotor separator, wherein the sensor assembly comprises a sensor and a mounting bracket according to some embodiments of the present disclosure, and wherein the mounting bracket is arranged to mount the sensor to the rotor separator.

Since the sensor assembly comprises a mounting bracket arranged to mount the sensor to a rotor separator, a sensor assembly is provided in which the sensor can be mounted to a rotor separator in a simple, efficient, and secure manner. Moreover, a sensor assembly is provided which can be used in a simple manner also in cases where the available space is limited. This is because a user can thread the mounting bracket around a portion of the rotor separator and displace the first and second end portion to the first closed position, for example using two or more fingers of one hand. Since the mounting portion is arranged at the first and second end portions, the user can in a simple manner mount the sensor to the mounting portion. Upon mounting the sensor to the mounting portion, the mounting portion attaches the mounting bracket to the portion of the rotor separator.

Thus, a sensor assembly is provided overcoming, or at least alleviating, at least some of the above-mentioned problems and drawbacks. As a result, the above-mentioned object is achieved.

According to a third aspect of the invention, the object is achieved by a rotor separator comprising a mounting bracket according to some embodiments of the present disclosure. Since the rotor separator comprises a mounting bracket according to some embodiments, a rotor separator is provided to which components can be mounted in a simple, efficient, and secure manner.

Accordingly, a rotor separator is provided overcoming, or at least alleviating, at least some of the above-mentioned problems and drawbacks. As a result, the above-mentioned object is achieved.

Optionally, the portion of the rotor separator comprises a plurality of circumferentially distributed positioning structures each arranged to superimpose a positioning structure of the mounting bracket when the mounting bracket is positioned around the portion of the rotor separator at a predetermined angular position relative the rotor separator. Thereby, conditions are provided for mounting the mounting bracket at a predetermined angular position relative the rotor separator, simply by aligning the positioning structure of the mounting bracket and a positioning structure of the rotor separator. In this manner, components can be mounted to the rotor separator at a predetermined angular position relative the rotor separator in a simple and precise manner. Furthermore, a more secure attachment can be provided of the mounting bracket relative the rotor separator.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a mounting bracket according to some embodiments,
Fig. 2 illustrates a rotor separator according to some embodiments,
Fig. 3 illustrates a bottom view of the mounting bracket illustrated in Fig. 1 with a first and a second end portion in a first closed position,
Fig. 4 illustrates the mounting bracket illustrated in Fig. 3 with the first and second end portions in a second closed position,
Fig. 5 illustrates a top view of the mounting bracket according to the embodiments illustrated in Fig. 1, Fig. 3, and Fig. 4,
Fig. 6 illustrates a second perspective view of the mounting bracket, according to the embodiments illustrated in Fig. 1 and Fig. 3 - Fig. 5,
Fig. 7 illustrates the mounting bracket according to the embodiments illustrated in Fig. 1 and

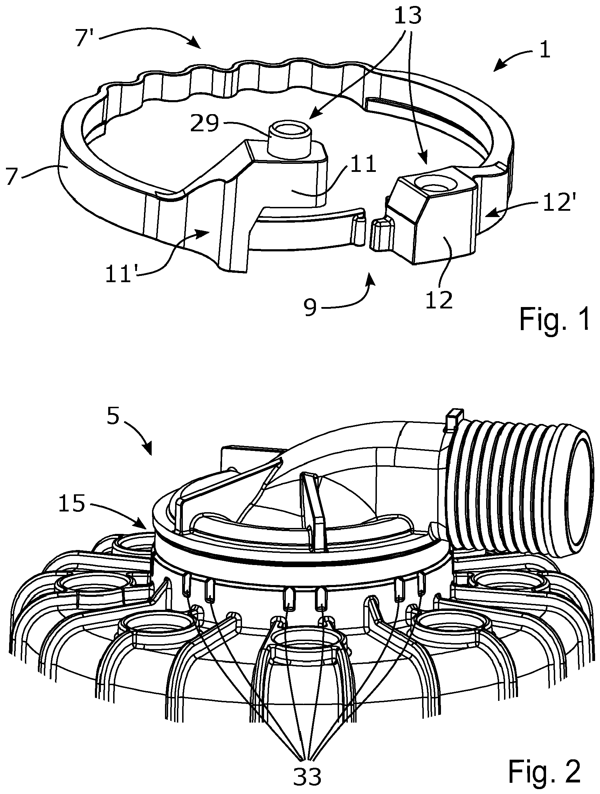

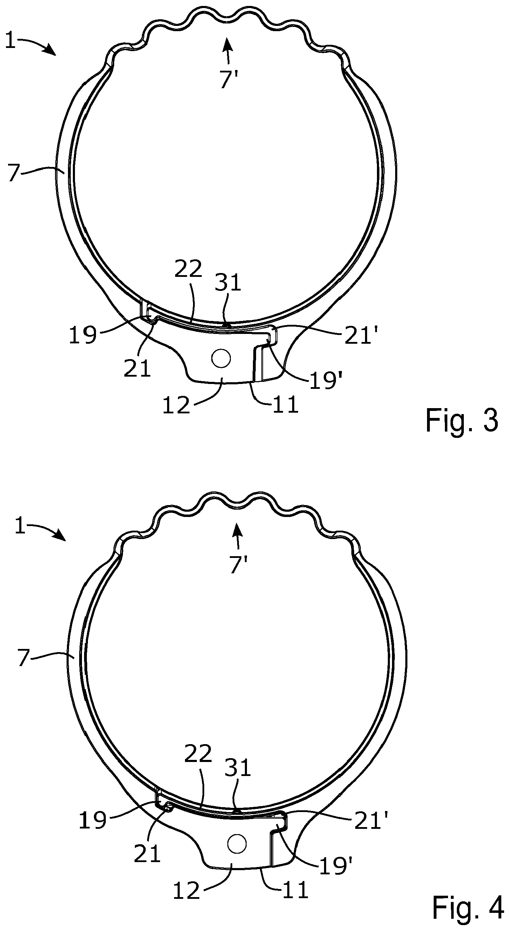

Fig. 3 - Fig. 6, threaded around a portion of the rotor separator illustrated in Fig. 2,

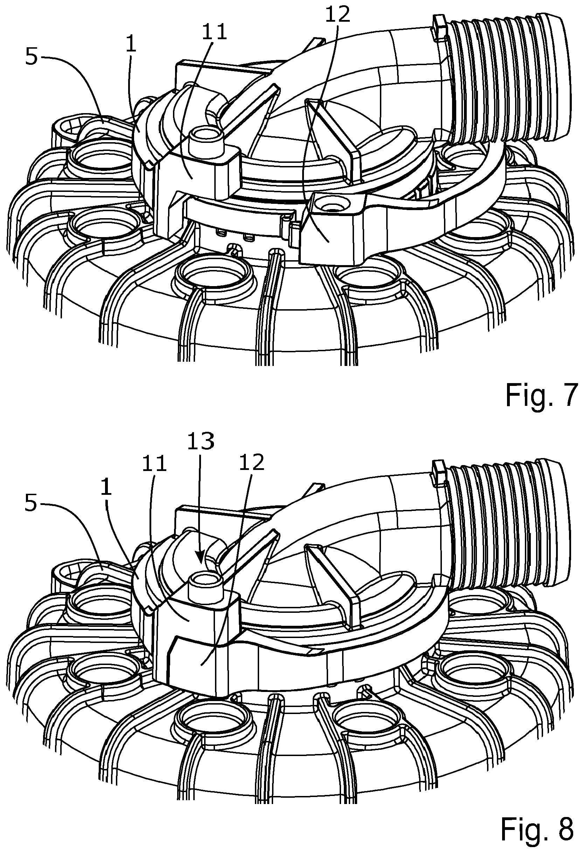

Fig. 8 illustrates the mounting bracket and the rotor separator, illustrated in Fig. 7, with the first and second end portions in the first closed position,

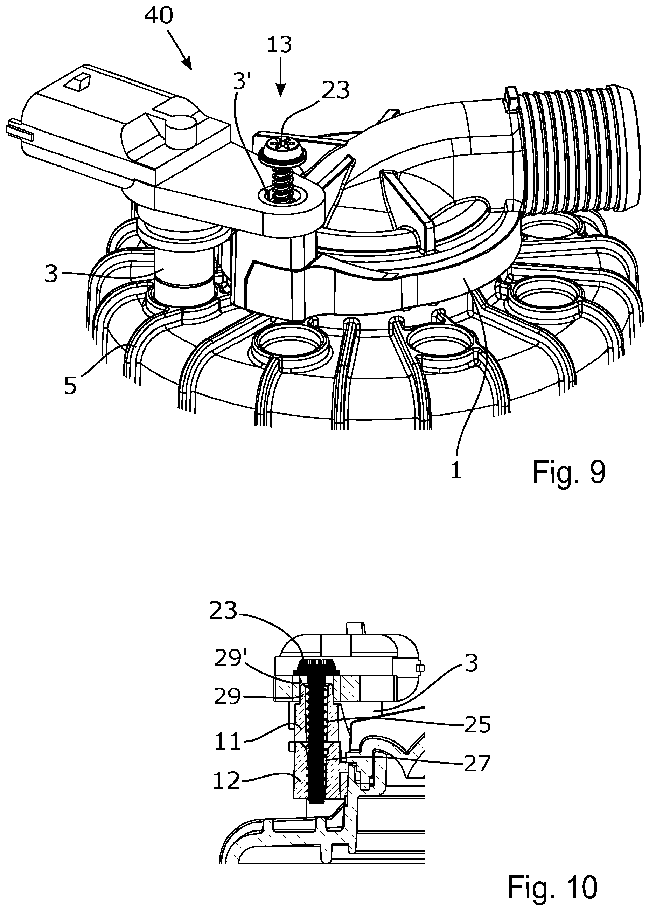

Fig. 9 illustrates the mounting bracket and the rotor separator illustrated in Fig. 8, with an example component partially mounted to a mounting portion of the mounting bracket,
Fig. 10 illustrates a cross section through the mounting portion of the mounting bracket illustrated in Fig. 9,

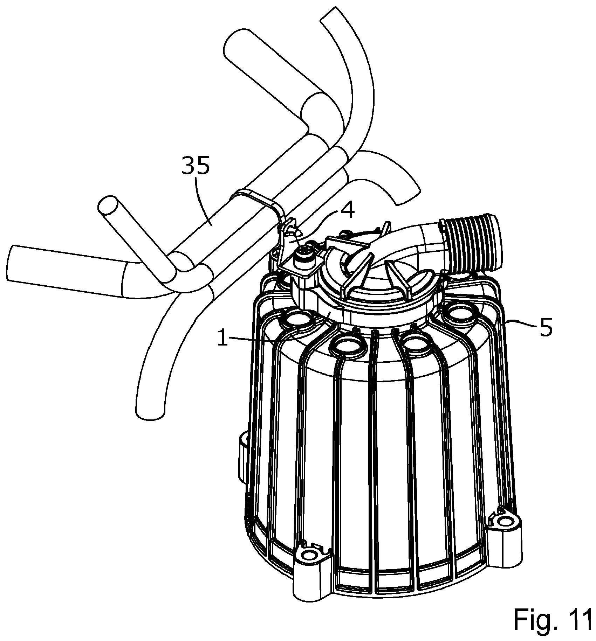

Fig. 11 illustrates a rotor separator and a mounting bracket according to the embodiments illustrated in Fig. 1 - Fig. 10, and

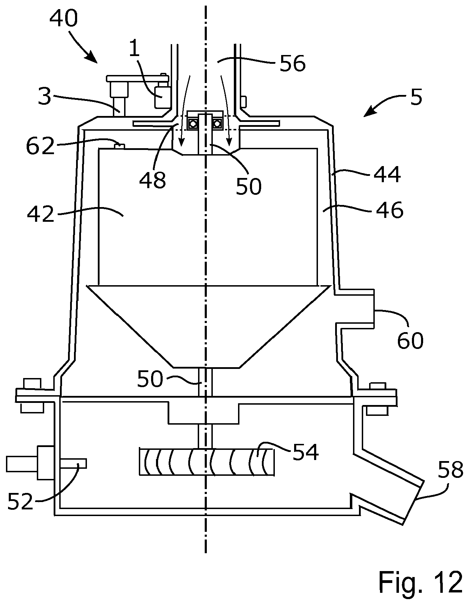

Fig. 12 schematically illustrates a cross section through a rotor separator, according to some embodiments.

### DETAILED DESCRIPTION

Aspects of the present invention will now be described more fully. Like numbers refer to like elements throughout. Well-known functions or constructions will not necessarily be described in detail for brevity and/or clarity.

**Fig. 1** illustrates a mounting bracket 1, according to some embodiments. The mounting bracket 1 is arranged to be positioned around a portion of a rotor separator and is configured to mount a component to the rotor separator. The mounting bracket 1 comprises an annular body 7 with an opening 9 and a first and a second end portion 11, 12 adjacent to the opening 9. Furthermore, the mounting bracket 1 comprises a mounting portion 13 arranged at the first and second end portions 11, 12. The first and second end portions 11, 12 are displaceable between an open position and a first closed position. In Fig. 1, the first and second end portions 11, 12 are illustrated in an open position.

According to the illustrated embodiments, the annular body 7 comprises an elastic section 7' arranged substantially opposite to the opening 9 and to first and second end portions 11, 12. The elastic section 7' facilitates displacement of the first and second end portions 11, 12 between the open position and the first closed position. According to the illustrated embodiments, the elastic section 7' is a corrugated section of the annular body 7. Thereby, conditions are provided for manufacturing the mounting bracket 1 in a cost-efficient manner. Moreover, as is further explained herein, the corrugated section 7' provides a spring function when the mounting bracket 1 is mounted around a portion of a rotor separator ensuring a more constant compression force of the mounting bracket 1 around portions of a rotor separators having different sizes. Each of the first and second end portions 11, 12 comprises a protruding section 11', 12' protruding radially from the annular body 7. The protruding sections 11', 12'facilitate mounting of the mounting bracket 1, which is further explained herein.

**Fig. 2** illustrates a rotor separator 5 according to some embodiments. According to the illustrated embodiments, the rotor separator 5 is a centrifugal separator. The mounting bracket 1, illustrated in Fig. 1, is arranged to be positioned around a portion 15 of the rotor separator 5 such that the mounting bracket 1 encloses the portion 15 of the rotor separator 5. According to the illustrated embodiments, the portion 15 of the rotor separator 5 is an inlet portion. According to further embodiments, the mounting bracket 1 may be arranged to be positioned around another type of portion of a rotor separator 5, such as an outlet portion thereof.

The mounting bracket 1 is arranged to be positioned around the portion 15 for example when the first and second end portions 11, 12 are in the open position, as is illustrated in Fig. 1. As is further explained herein, the mounting portion 13 of the mounting bracket 1, illustrated in Fig. 1, is arranged to attach the mounting bracket 1 to the portion 15 of the rotor separator 5 when a component is mounted to the mounting portion 13.

**Fig. 3** illustrates a bottom view of the mounting bracket 1 illustrated in Fig. 1 with the first and second end portions 11, 12 in a first closed position. According to the illustrated embodiments, the mounting bracket 1 comprises a retaining mechanism 19, 21, 19', 21' configured to retain the first and second end portions 11, 12 in the first closed position when the first and second end portions 11, 12 are displaced to the first closed position. The retaining mechanism 19, 21, 19', 21' comprises a first protrusion 19 and a first recess 21. The first protrusion 19 is arranged to protrude into the first recess 21 when the first and second end portions 11, 12 are in the first closed position.

Moreover, the mounting bracket 1 comprises a flange 22 arranged at a radially inner portion of the first end portion 11, wherein the first protrusion 19 is arranged at an end portion of the flange 22. The first recess 21 is arranged on a portion of the annular body 7 adjacent to the second end portion 12. As can be seen in Fig. 3, the flange 22 extends past the second end portion 12 when the first and second end portions 11, 12 are in the first closed position. Moreover, as can be seen in Fig. 3, the first protrusion 19 is arranged to protrude into the first recess 21 in a radial direction relative the annular body 7. In this manner, the first and second end portions 11, 12 are locked from being displaced in tangential directions relative the annular body 7. The flange 22 biases the first protrusion 19 in a radial direction towards the first recess 21. Moreover, flange 22 is arranged to abut against the portion of the rotor separator when the mounting bracket 1 is mounted around the portion of the rotor separator and when the first and second end portions 11, 12 are in the first closed position. In this manner, an unintended displacement of the first protrusion 19 out of the first recess 21 is avoided.

The retaining mechanism 19, 21, 19', 21'further comprises a second protrusion 19' arranged at the second end portion 12 and a second recess 21' arranged at the first end portion 11. The second protrusion 19' and the second recess 21' are arranged at a circumferential distance from the first protrusion 19 and the first recess 21. As can be seen in Fig. 3, the second protrusion 19' is arranged to protrude into the second recess 21' in a tangential direction relative the annular body 7 when the first and second end portions 11, 12 are in the first closed position. In this manner, the first and second end portions 11, 12 are locked from being displaced in radial directions relative the annular body 7. By combining a radial and tangential lock, the first and second end portions 11, 12 are securely retained in the first closed position. Thereby, the mounting bracket 1 is held securely around a portion of a rotor separator when the first and second end portions 11, 12 are in the first closed position.

As is further explained herein, the mounting portion 13 is arranged to attach the mounting bracket 1 to the portion 15 of the rotor separator 5, when the component 3 is mounted to the mounting portion 13, by displacing the first and second end portions 11, 12 from the first closed position to a second closed position.

**Fig. 4** illustrates the mounting bracket 1 illustrated in Fig. 3 with the first and second end portions 11, 12 in the second closed position. As can be seen when comparing Fig. 3 and Fig. 4, the circumference of the annular body 7 is reduced upon a displacement of the first and second end portions 11, 12 from the first closed position to the second closed position. Moreover, the second protrusion 19' is displaced further into the second recess 21' upon displacement of the first and second end portions 11, 12 from the first closed position to the second closed position. According to the illustrated embodiments, the first recess 21 is provided with a greater width in the tangential direction than the first protrusion 19. As can be seen when comparing Fig. 3 and Fig. 4, the first protrusion 19 is displaced in a tangential direction in the first recess 21 upon displacement of the first and second end portions 11, 12 from the first closed position to the second closed position.

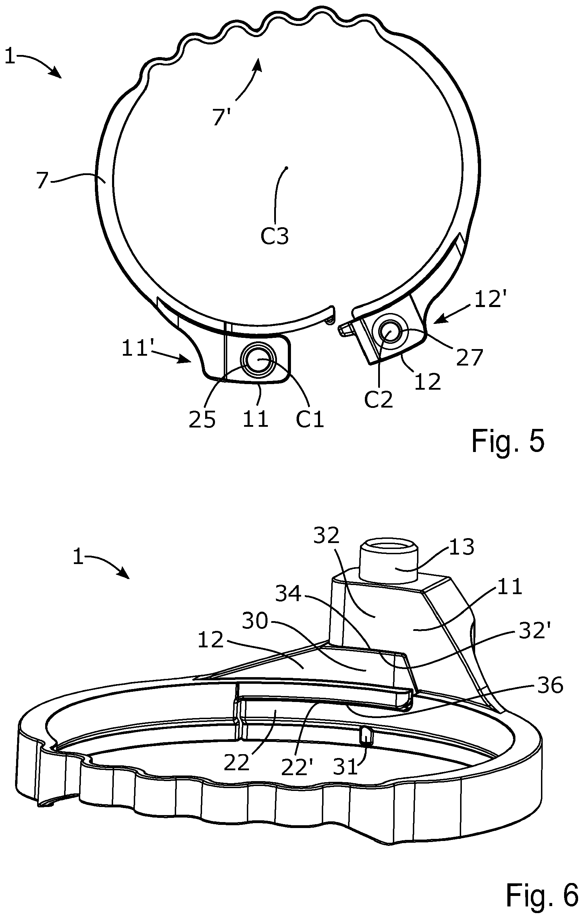

**Fig. 5** illustrates a top view of the mounting bracket 1 according to the embodiments illustrated in Fig. 1, Fig. 3, and Fig. 4. As indicated in Fig. 5, the mounting portion 13 comprises a first hole 25 in the first end portion 11 and a second hole 27 in the second end portion 12. According to the illustrated embodiments, each of the first and second holes 25, 27 comprises a centre axis C1, C2 substantially parallel to a centre axis C3 of the annular body 7. The mounting portion 13 is configured to receive a fastening element, such as a screw, a pin, a rod, a bolt, or the like. An example of a fastening element 23 is illustrated in Fig. 9 and in Fig. 10, in the form of a screw.

The first and second holes 25, 27 are arranged at positions on the respective first and second end portions 11, 12 causing the displacement of the first and second end portions 11, 12 from the first closed position to the second closed position when a fastening element is inserted into the first and second holes 25, 27. That is, when the first and second end portions 11, 12 are in the first closed position, as illustrated in Fig. 3, the first and second holes 25, 27 are only partially aligned. When the first and second end portions 11, 12 are in the second closed position, as illustrated in Fig. 4, the first and second holes 25, 27 are fully aligned, or substantially fully aligned.

**Fig. 6** illustrates a second perspective view of the mounting bracket 1, according to the embodiments illustrated in Fig. 1 and Fig. 3 - Fig. 5. In Fig. 6, the mounting bracket 1 is illustrated in the first closed position. As best seen in Fig. 6, when first and second end portions 11, 12 are in the first closed position, the first end portion 11 at least partially overlaps the second end portion 12, seen in a direction of the centre axis C3 of the annular body 7, indicated in Fig. 5. Moreover, as indicated in Fig. 6, the second end portion 12 comprises a section 30 which is inserted between a section 32 of the first end portion 11 and the flange 22 when first and second end portions 11, 12 are in the first closed position. The section 30 of the second end portion 12 comprises a first surface 34 having a first surface normal parallel to a centre axis C3 of the annular body 7, indicated in Fig. 5. Furthermore, the section 30 of the second end portion 12 comprises a second surface 36 having a second surface normal parallel to a centre axis C3 of the annular body 7, indicated in Fig. 5, wherein the second surface normal is opposite to the first surface normal.

The first surface 34 is arranged to abut against a surface 32' of the section 32 of the first end portion 11 when the first and second end portions 11, 12 are in the first closed position, and when the first and second end portions 11, 12 are in the second closed position. The second surface 36 is arranged to abut against a surface 22' of the flange 22 when the first and second end portions 11, 12 are in the first closed position, and when the first and second end portions 11, 12 are in the second closed position.

In this manner, the first and second end portions 11, 12 are locked to each other in directions of the centre axis C3 of the annular body 7, indicated in Fig. 5, when the first and second end portions 11, 12 are in the first closed position, and when the first and second end portions 11, 12 are in the second closed position. As a further result thereof, the first and second end portions 11, 12 are more securely retained in the first and second closed positions also when a force is applied onto the mounting portion 13, for example during mounting of a component to the mounting portion 13.

**Fig. 7** illustrates the mounting bracket 1, according to the embodiments illustrated in Fig. 1 and Fig. 3 - Fig. 6, threaded around a portion of the rotor separator 5, according to the embodiments illustrated in Fig. 2. In Fig. 7, the mounting bracket 1 is illustrated in an open position. As indicated in Fig. 2, the portion 15 of the rotor separator 5 comprises a plurality of circumferentially distributed positioning structures 33, in the form of a plurality of circumferentially distributed positioning recesses 33. As can be seen in Fig. 3, Fig. 4, and Fig. 6, the mounting bracket 1 comprises a positioning structure 31, in the form of a protrusion 31. The positioning structure 31 of the mounting bracket 1 is arranged to superimpose a positioning structure 33 of the rotor separator 5 when the mounting bracket 1 is positioned around the portion 15 of the rotor separator 5 at a predetermined angular position relative the rotor separator 5. In this manner, the mounting bracket 1 can be arranged at a predetermined angular position relative the rotor separator 5, simply by aligning the positioning structure 31 of the mounting bracket 1 and a positioning structure 33 of the rotor separator 5.

A user may thus ensure that the positioning structure 31 of the mounting bracket 1 is aligned with a desired positioning structure 33 of the rotor separator 5 when the mounting bracket 1 is in the position illustrated in Fig. 7. Then the user may displace the first and second end portions 11, 12 from the open position to the first closed position simply by applying a force onto the respective protruding section 11', 12', indicated in Fig 5, in a respective closing direction, for example using two or more fingers of one hand.

**Fig. 8** illustrates the mounting bracket 1 and the rotor separator 5, illustrated in Fig. 7, with the first and second end portions 11, 12 in the first closed position. Since the mounting bracket 1 comprises the retaining mechanism 19, 21, 19', 21', the first and second end portions 11, 12 are securely retained in the first closed position and the mounting bracket 1 is held securely around the portion of the rotor separator 5. Thereby, as is further explained below, the user can mount a component to the mounting portion 13 in a simple manner without having to hold or fixate the mounting bracket 1 relative the rotor separator 5.

As also seen in Fig. 8, the first end portion 11 at least partially overlaps the second end portion 12, when first and second end portions 11, 12 are in the first closed position.

As an alternative to the above described, the user may also align the positioning structure 31 of the mounting bracket 1 and a positioning structure 33 of the rotor separator 5 by turning the mounting bracket 1 relative the rotor separator 5 when the mounting bracket 1 is in the position illustrated in Fig. 8, i.e. when the first and second end portions 11, 12 are in the first closed position.

**Fig. 9** illustrates the mounting bracket 1 and the rotor separator 5, illustrated in Fig. 8, with an example component 3 partially mounted to the mounting portion. According to the embodiments illustrated in Fig. 9, the component 3 is a sensor 3 configured to sense the rotation of a rotating member of the rotor separator 5. According to the illustrated embodiments, the mounting portion of the mounting bracket 1 is configured to receive a fastening element 23 in the form of a screw. According to further embodiments, the mounting portion of the mounting bracket 1 may configured to receive another type of fastening element, such as a bolt, a pin, a rod, or the like.

In Fig. 9, the fastening element 23 is inserted through a hole 3' of the component 3 and into the first hole 25 in the first end portion 11, indicated in Fig. 5. According to the illustrated embodiments, the mounting portion 13 is arranged such that a fastening element 23 is intended to be inserted into the first hole 25 in the first end portion 11 and screwed into the second hole 27 in the second end portion 12. As can be seen in Fig. 5, according to the illustrated embodiments, the second hole 27 has a smaller diameter than the first hole 25.

**Fig. 10** illustrates a cross section through the mounting portion 13 of the mounting bracket 1 illustrated in Fig. 9. In Fig. 10, the fastening element 23 is fully inserted into the first and second holes 25, 27. That is, in comparison to Fig. 9, the fastening element 23 has been fully screwed into the second hole 27 of the second end portion 12.

When the fastening element is screwed into the second hole 27, the fastening element displaces the first and second holes 25, 27 from the partially aligned positions to fully aligned positions, or substantially fully aligned positions. In this manner, the first and second end portions 11, 12 are displaced from the first closed position, illustrated in Fig. 3, to the second closed position illustrated in Fig. 4.

Upon the displacement of the first and second end portions 11, 12 from the first closed position to the second closed position, a compression force around the portion of the rotor separator 5 is achieved. Furthermore, upon the displacement of the first and second end portions 11, 12 from the first closed position to the second closed position, the corrugated section 7' may expand to a certain extent, which allows the mounting bracket 1 to be mounted around portions of rotor separators having different sizes. Moreover, the corrugated section 7' reduces the impact of manufacturing tolerances of the mounting bracket 1, as well as reduces the impact of manufacturing tolerances of rotor separators to which the mounting bracket 1 is intended to be mounted.

According to the illustrated embodiments, the mounting bracket 1 is provided in a single piece of polymeric material, which provides conditions for manufacturing the mounting bracket 1 in a cost-efficient manner. As also can be seen in Fig. 10, according to the illustrated embodiments, the second hole 27 has a smaller diameter than the first hole 25. Moreover, the second hole 27 is provided with a smooth cylindrically shaped delimiting wall into which treads of the fastening element 23 can be screwed. According further embodiments, the second hole 27 may be provided with internal threads into which treads of the fastening element 23 can be screwed. Such internal threads may be provided in a polymeric delimiting wall of the second hole 27. As an alternative, the second hole 27 may comprise a sleeve element provided with internal threads in a harder material, such as steel.

As indicated in Fig. 1 and in Fig 9, the mounting bracket 1 comprises a guiding structure 29 arranged at the mounting portion 13. The guiding structure 29 facilitates positioning and alignment of a component 3 mounted to the mounting portion 13. The guiding structure 29 is arranged to guide a component 3 relative the mounting portion 13 when the component 3 is mounted to the mounting portion 13. According to the illustrated embodiments, the guiding structure 29 is cylindrical and protrudes from the mounting portion 13. Moreover, according to the illustrated embodiments, the component 3 is provided with a matching recess 29'. When the component 3 is mounted to the mounting portion 13, the guiding structure 29 is displaced into the recess 29' of the component 3. In this manner, the guiding structure 29 guides the component 3 into a desired position relative the mounting portion 13 when the component 3 is mounted to the mounting portion 13. According to further embodiments, the guiding structure 29 may be provided with a different shape than a cylindrical shape, such as a square shape, or any other appropriate shape. Furthermore, according to some embodiments, instead of protruding from the mounting portion 13, the guiding structure may be formed as a recess arranged adjacent to the mounting portion 13. According to such embodiments, the component 3 may be provided with a matching protrusion arranged to be displaced into the recess of the guiding structure when the component 3 is mounted to the mounting portion 13. Such a recess may for example be cylindrical, square shaped, or any other appropriate shape.

**Fig. 11** illustrates a rotor separator 5 and a mounting bracket 1 according to the embodiments illustrated in Fig. 1 - Fig. 10. In Fig. 11, a second type of component 4 is mounted to the mounting portion of the mounting bracket 1, namely a second bracket 4 to which a bundle of pipes, tubes or cables 35 is arranged. Thus, the mounting bracket 1 as disclosed herein can be used to mount various types of components onto rotor separators 5 and the illustrated example components 3, 4 can be regarded purely as examples.

**Fig. 12** schematically illustrates a cross section through a rotor separator 5, according to some embodiments. According to the illustrated embodiments, the rotor separator 5 is a centrifugal separator 5 configured to separate a liquid phase, as well as particles and/or substances, from crankcase gases of an internal combustion engine using a rotating member 42. According to further embodiments, the rotor separator 5 may be another type of rotor separator configured to separate liquid phases, particles and/or substances from other types of fluids than exhaust gases, such as for example a centrifugal separator arranged for separating oil, grease and solids from industrial liquid coolants, or a centrifugal separator arranged for removing particles and water from industrial oils, such as hydraulic oils. The rotor separator 5 comprises a housing 44 forming a separation chamber 46. The housing 44 is a stationary housing 44 which means that it is arranged to be stationary relative the internal combustion engine during operation. The rotor separator 5 comprises an opening 48 in the housing 44. A rotor shaft 50 is rotatably mounted at the opening 48 and extends into the separation chamber 46. The rotor shaft 50 is configured to hold the rotating member 42 within the separation chamber 46.

The rotor separator 5 illustrated in Fig. 12 comprises a hydraulic drive arrangement with a hydraulic nozzle 52 and wheel 54. The hydraulic nozzle 52 may be connected to an engine oil circuit of the internal combustion engine. According to such embodiments, during running of the internal combustion engine, oil may be pumped through the hydraulic nozzle 52 onto a wheel 54 connected to the rotor shaft 50 to thereby rotate the rotor shaft 50 and the rotating member 42. As an alternative, the rotor separator 5 may comprise another type of hydraulic drive arrangement, such as a reaction drive where a liquid jet is discharged from a rotor in a tangential direction, at a position offset from the rotational axis of the rotor, thereby providing the rotational force of the rotor. As a further alternative, the rotor separator 5 may comprise an electric drive arrangement, such as an electric motor arranged to rotate the rotor shaft 50 and the rotating member 42. As a still further alternative, the rotor separator 5 may comprise a turbine wheel connected to the rotor shaft 50, where the turbine wheel is arranged to be driven by exhaust gases from the internal combustion engine to rotate the rotor shaft 50 and the rotating member 42.

The rotor separator 5 illustrated in Fig. 12 comprises an inlet 56 for the crankcase gas in an upper region of the housing 44. From the inlet 56, the crankcase gas is ducted into the rotating member 42. The rotating member 42 comprises separation members and/or separation discs such as a stack of frustoconical separation discs. For clarity reasons such separation members and/or separation discs are not illustrated in Fig. 12. During rotation of the rotating member 42, oil, as well as other particles and/or substances, from the crankcase gas is separated from the gas. The separated oil, and other particles and/or substances, is led to an oil outlet 58 of the rotor separator 5, which together with oil from the hydraulic nozzle 52 used to drive the wheel 54, is led back to the engine oil circuit of the internal combustion engine. The rotor separator 5 further comprises a cleaned crankcase gas outlet 60, where cleaned crankcase gas is led in a closed circuit ventilation to the internal combustion engine, or is led in an open circuit ventilation out into the surrounding air.

It should be noted that the inlet for the crankcase into the rotor separator gas may alternatively be arranged in a lower part of the housing. Then, the outlet of cleaned crankcase gas may be arranged at an upper part of the housing.

The rotor separator 5 comprises a sensor assembly 40. The sensor assembly 40 is configured to sense the rotation of the rotating member 42 of the rotor separator 5. The sensor assembly 40 comprises a sensor 3 and a mounting bracket 1 according to the embodiments illustrated in Fig. 9 and Fig. 10. The sensor 3 is mounted in a predetermined position relative the housing 44 via the mounting bracket 1. According to the illustrated embodiments, the sensor 3 is a Hall effect sensor configured to sense the magnetic field of a magnet 62 arranged on the rotating member 42. In this manner, the rotation of the rotating member 42 can be detected by the sensor 3 and thus also the rotational speed of the rotating member 42. According to further embodiments, the sensor 3 may comprise another type of sensor, such as for example a temperature sensor, a vibration sensor, or the like.

According to the illustrated embodiments, the first closed position is a partially closed position and the second closed position is a fully closed position. Thus, throughout this disclosure, the wording "first closed position" may be replaced by the wording "partially closed position". Likewise, throughout this disclosure, the wording "second closed position" may be replaced by the wording "fully closed position".

Moreover, as understood from the herein described, the annular body 7 of the mounting bracket 1 is annular at least when the first and second end portions 11, 12 are in the first or second closed position. According to some embodiments, the elastic section 7' may allow the first and second end portions 11, 12 to be displaced to positions in which the distance between the first and second end portions 11, 12 corresponds to the diameter of the annular body 7 obtained when the first and second end portions 11, 12 are in the first closed position. When in such positions, the annular body 7 assumes a C-shaped form. Correspondingly, as understood from the above, the opening 9, as referred to herein, is fully visible when the first and second end portions 11, 12 are in an open position. When the first and second end portions 11, 12 are in the first or second closed position, the opening 9 is present in the sense that the first and second end portions 11, 12 are not stuck together materially. An alternative wording for the annular body 7 is that the annular body 7 is formed as an open ring.

Moreover, as understood from the above, due to the features of the mounting bracket 1, the mounting bracket 1 can be used to mount components 3 to rotor separators 5 in a simple manner, using one hand only. Furthermore, when mounted, the mounting bracket 1 requires little space, which provides conditions for mounting components 3 to rotor separators 5 in a space efficient manner. The feature that the first and second holes 25, 27 comprises a centre axis C1, C2 substantially parallel to a centre axis C3 of the annular body 7 may encompass that the angle between the respective centre axis C1, C2 of the first and second holes 25, 27 and the centre axis C3 of the annular body 7 is less than 7 degrees.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A mounting bracket (1) configured to mount a component (3, 4) to a rotor separator (5), wherein the mounting bracket (1) comprises:
- an annular body (7) with an opening (9) and a first and a second end portion (11, 12) adjacent to the opening (9), and
- a mounting portion (13) arranged at the first and second end portions (11, 12),
wherein the mounting bracket (1) is arranged to be positioned around a portion (15) of the rotor separator (5), and
wherein the mounting portion (13) is arranged to attach the mounting bracket (1) to the portion (15) of the rotor separator (5) when the component (3, 4) is mounted to the mounting portion (13).

2. The mounting bracket (1) according to claim 1, wherein the mounting bracket (1) comprises a retaining mechanism (19, 21, 19', 21') configured to retain the first and second end portions (11, 12) in a first closed position when the first and second end portions (11, 12) are displaced to the first closed position.

3. The mounting bracket (1) according to claim 2, wherein the retaining mechanism (19, 21, 19', 21') comprises a first protrusion (19) and a first recess (21), and wherein the first protrusion (19) is arranged to protrude into the first recess (21) when the first and second end portions (11, 12) are in the first closed position.

4. The mounting bracket (1) according to claim 3, wherein the mounting bracket (1) comprises a flange (22), and wherein the first protrusion (19) is arranged on the flange (22).

5. The mounting bracket (1) according to claim 4, wherein the flange (22) is arranged at the first end portion (11).

6. The mounting bracket (1) according to claim 5, wherein the flange (22) extends past the second end portion (12) when the first and second end portions (11, 12) are in the first closed position.

7. The mounting bracket (1) according to any one of the claims 3 - 6, wherein the first protrusion (19) is arranged to protrude into the first recess (21) in a radial direction relative the annular body (7) when the first and second end portions (11, 12) are in the first closed position.

8. The mounting bracket (1) according to any one of the claims 2 - 7, wherein the retaining mechanism (19, 21, 19', 21') comprises a second protrusion (19') and a second recess (21'), and wherein the second protrusion (19') is arranged to protrude into the second recess (21') in a tangential direction relative the annular body (7) when the first and second end portions (11, 12) are in the first closed position.

9. The mounting bracket (1) according to claim 8, wherein the second protrusion (19') and the second recess (21') are arranged at a circumferential distance from the first protrusion (19) and the first recess (21).

10. The mounting bracket (1) according to claim 8 or 9, wherein the second protrusion (19') is arranged at the second end portion (12).

11. The mounting bracket (1) according to any one of the preceding claims, wherein the mounting portion (13) is configured to receive a fastening element (23).

12. The mounting bracket (1) according to claim 11, wherein the mounting portion (13) is arranged to displace the first and second end portions (11, 12) from a first closed position to a second closed position when the fastening element (23) is inserted into the mounting portion (13).

13. The mounting bracket (1) according to any one of the preceding claims, wherein the mounting portion (13) comprises a first hole (25) in the first end portion (11) and a second hole (27) in the second end portion (12).

14. The mounting bracket (1) according to claim 12 and 13, wherein the first and second holes (25, 27) are arranged at positions causing the displacement of the first and second end portions (11, 12) from the first closed position to the second closed position when a fastening element (23) is inserted into the first and second holes (25, 27).

15. The mounting bracket (1) according to claim 12 or 14, wherein the circumference of the annular body (7) is reduced upon a displacement of the first and second end portions (11, 12) from the first closed position to the second closed position.

16. The mounting bracket (1) according to claim 13 or 14, wherein each of the first and second holes (25, 27) comprises a centre axis (C1, C2) substantially parallel to a centre axis (C3) of the annular body (7).

17. The mounting bracket (1) according to any one of the preceding claims, wherein the annular body (7) comprises an elastic section (7') arranged substantially opposite to the opening (9).

18. The mounting bracket (1) according to claim 17, wherein the elastic section (7') is a corrugated section of the annular body (7).

19. The mounting bracket (1) according to any one of the preceding claims, wherein each of the first and second end portions (11, 12) comprises a protruding section (11', 12') protruding radially from the annular body (7).

20. The mounting bracket (1) according to any one of the preceding claims, wherein the mounting bracket (1) comprises a guiding structure (29) arranged at the mounting portion (13), wherein the guiding structure (29) is arranged to guide the component (3, 4) relative the mounting portion (13) when the component (3, 4) is mounted to the mounting portion (13).

21. The mounting bracket (1) according to any one of the preceding claims, wherein the mounting bracket (1) comprises a positioning structure (31) arranged to superimpose a positioning structure (33) of the rotor separator (5) when the mounting bracket (1) is positioned around the portion (15) of the rotor separator (5) at a predetermined angular position relative the rotor separator (5).

22. The mounting bracket (1) according to claim 21, wherein the positioning structure (31) of the mounting bracket (1) comprises a protrusion (31), and wherein the positioning structure (33) of the rotor separator (5) comprises a plurality of circumferentially distributed recesses (33).

23. The mounting bracket (1) according to any one of the preceding claims, wherein the mounting bracket (1) is arranged to be mounted around an inlet or outlet portion (15) of the rotor separator (5).

24. A sensor assembly (40) for sensing the rotation of a rotating member (42) of a rotor separator (5), wherein the sensor assembly (40) comprises a sensor (3) and a mounting bracket (1) according to any one of the preceding claims, and wherein the mounting bracket (1) is arranged to mount the sensor (3) to the rotor separator (5).

25. A rotor separator (5) comprising a mounting bracket (1) according to any one of the claims 1 - 23, or a sensor assembly (40) according to claim 24.

26. The rotor separator (5) according to claim 25, wherein the portion (15) of the rotor separator (5) comprises a plurality of circumferentially distributed positioning structures (33) each arranged to superimpose a positioning structure (31) of the mounting bracket (1) when the mounting bracket (1) is positioned around the portion (15) of the rotor separator (5) at a predetermined angular position relative the rotor separator (5).
